# FASCICULE DE BREVET EUROPEEN

(11) **EP 2 653 701 B1**
(45) Date de publication et mention de la délivrance du brevet: **08.04.2015**
(21) Numéro de dépôt: 13305486.6
(22) Date de dépôt: 15.04.2013
(51) Int. Cl.: F02C 9/48, F02K 1/12, F02K 1/15, F02K 1/16, F02K 1/17, F02K 3/075, B64C 9/34

(54) **Dispositif de commande d'une tuyère à section variable d'un aéronef**
Regelapparat für eine Düse mit variabler Geometrie eines Luftfahrzeugs
Control apparatus for a variable section nozzle of an aircraft

(30) Priorité: 17.04.2012 FR 1253503
(43) Date de publication de la demande: 23.10.2013
(73) Titulaire: Airbus Opérations SAS, 31060 Toulouse (FR)
(72) Inventeur: Bulin, Guillaume, 31700 Blagnac (FR); Oberle, Patrick, 82600 Verdun sur Garonne (FR); Devienne, Nicolas, 31000 Toulouse (FR)
(74) Mandataire: Fantin, Laurent

(56) Documents cités:
- EP-A1- 1 413 735
- EP-A2- 1 978 231
- FR-A1- 2 928 681
- GB-A- 588 502
- US-A- 5 826 823

## Description

La présente invention se rapporte à un dispositif de commande d'une tuyère à section variable d'un aéronef.

Pour réduire la consommation de carburant, certains aéronefs disposent d'une motorisation avec une tuyère à section variable. Ainsi, il est possible d'adapter le flux traversant la tuyère, en modifiant sa section, aux conditions extérieures et au régime de fonctionnement du moteur afin d'optimiser le rendement de la motorisation.

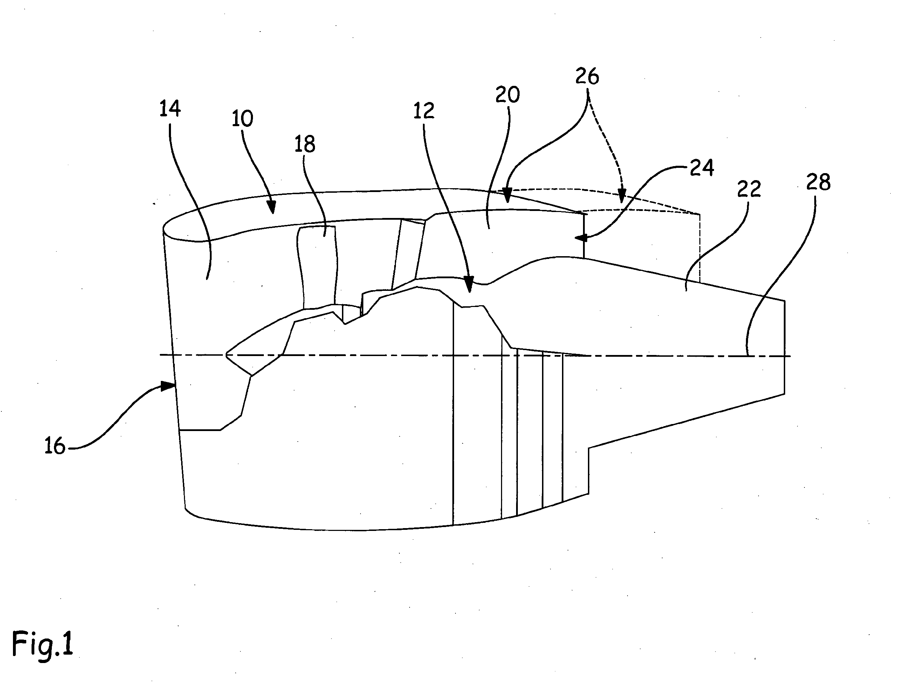

Selon un mode de réalisation illustré sur la figure 1, un ensemble propulsif d'un aéronef comprend une nacelle 10 dans laquelle est disposée de manière sensiblement concentrique une motorisation 12 reliée par l'intermédiaire d'un mât au reste de l'aéronef.

La nacelle 10 comprend une paroi intérieure délimitant un conduit 14 avec une entrée d'air 16 à l'avant, une première partie du flux d'air entrant, appelée flux primaire, traversant la motorisation 12 pour participer à la combustion, la seconde partie du flux d'air, appelée flux secondaire, étant entrainée par une soufflante 18 et s'écoulant dans un conduit annulaire 20 délimité par la paroi intérieure de la nacelle et la paroi extérieure de la motorisation. A l'arrière, le flux primaire s'échappe via une tuyère fixe 22 avec une portion tronconique dont le diamètre se réduit selon le sens d'écoulement des flux. Le flux secondaire s'échappe via une sortie 24 délimitée à l'intérieur par la tuyère fixe 22 et à l'extérieur par une tuyère mobile 26 correspondant à la tuyère à section variable 26 prévue à l'extrémité arrière de la nacelle.

Selon un mode de réalisation, la tuyère à section variable 26 peut se translater selon une direction de déplacement parallèle à la direction longitudinale du moteur (correspondant à l'axe du moteur référencé 28) entre deux positions extrêmes correspondant à une première position avant illustrée en trait fort sur la figure 1 et une position arrière illustrée en pointillés sur la figure 1. Dans la mesure où la tuyère fixe a une forme tronconique, il est possible de contrôler la section de sortie de la tuyère à section variable en ajustant la position de cette dernière selon la direction de déplacement.

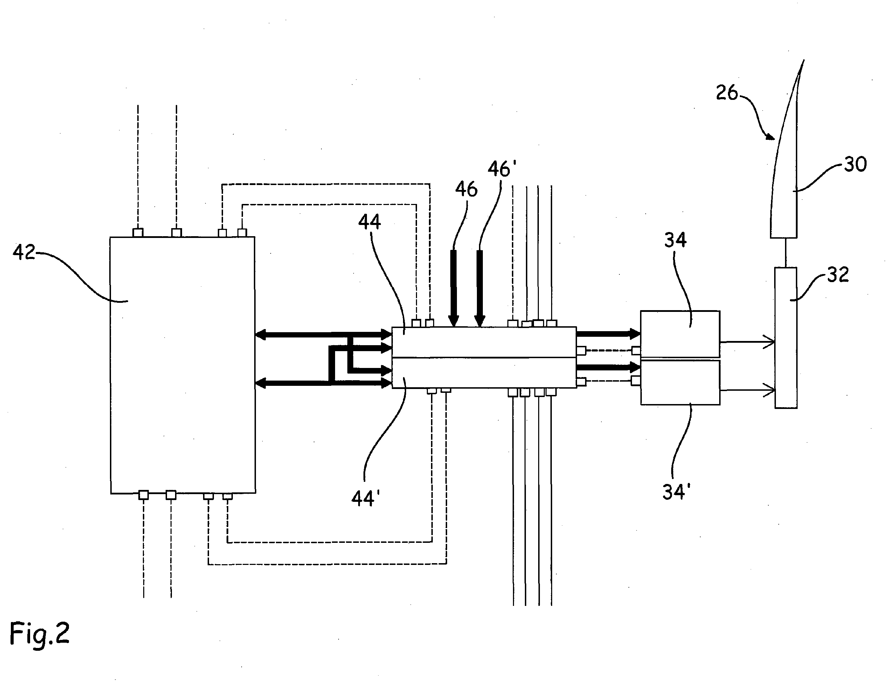

Selon un mode de réalisation illustré sur la figure 2, la tuyère à section variable 26 comprend des parties mobiles 30 qui se déplacent grâce à une chaîne de transmission mécanique 32 entrainée par un moteur 34. La chaîne de transmission mécanique 32 permet de transformer le mouvement de rotation de l'arbre de sortie du moteur 34 en un mouvement de translation selon la direction de déplacement des parties mobiles.

L'invention se rapporte plus particulièrement à une tuyère à section variable qui n'est pas sujette à l'accrétion de givre, comme par exemple celle décrite dans le document US-3.797.785.

Sur la figure 2, on a illustré un dispositif de commande d'une tuyère à section variable selon l'art antérieur.

Pour contrôler la position des parties mobiles, la chaîne de commande comprend un système de régulation 42 de la motorisation appelé FADEC (pour Full Authority Digital Engine Control), et un organe de contrôle 44 appelé PE ( pour Power Electronics) assurant le contrôle du moteur 34.

Ainsi, lorsque le système de régulation 42 transmet un signal à l'organe de contrôle 44, ce dernier impulse une rotation au moteur 34 qui par l'intermédiaire de la chaîne de transmission mécanique 32 génère la translation des parties mobiles 30. L'organe de contrôle 44 assure entre autre la fonction de convertisseur de puissance entre un circuit de commande en amont et un circuit de puissance en aval.

Pour répondre aux contraintes imposées par les autorités de certification, le dispositif de commande utilise des moyens de redondance pour améliorer la fiabilité de pilotage à défaut d'améliorer la fiabilité des composants eux-mêmes. Ainsi, le dispositif de commande comprend deux moteurs 34 et 34', chacun d'eux étant capable d'engendrer le mouvement de toutes les parties mobiles 30, deux organes de contrôle 44 et 44', un pour chaque moteur et deux alimentations 46 et 46' pour alimenter en énergie électrique les organes de contrôle et les moteurs associés.

Pour assurer la transmission des signaux entre les organes de contrôle et le système de régulation 42 en respectant les contraintes de ségrégation, il est prévu quatre séries de câbles, deux pour chaque organe de contrôle 44, 44'. Cette solution permet de respecter les contraintes imposées par les autorités de certification.

Si un organe de contrôle est défaillant, l'autre peut assurer le contrôle des moteurs et ainsi le contrôle de la position des parties mobiles de la tuyère à section variable.

Si une alimentation est défaillante, la seconde alimentation peut la remplacer. Pour chaque organe de contrôle, si une série de câbles est défaillante, les communications entre le système de régulation et l'organe de contrôle peuvent être assurées par la seconde série de câbles.

Enfin, si un moteur est défaillant, le mouvement des parties mobiles de la tuyère à section mobile peut être assuré par le second moteur.

Même s'il donne satisfaction sur le plan de la sécurité et de la fiabilité, ce dispositif de commande n'est pas pleinement satisfaisant du fait du doublement de certains éléments qui conduit à augmenter la masse embarquée, et à complexifier le fonctionnement et l'intégration.

Une alternative pourrait consister à opter pour une architecture de type simple, ne comprenant qu'un organe de contrôle pour chaque tuyère à section variable. Toutefois, cette architecture ne permet pas de respecter les normes actuelles en matière de fiabilité du contrôle de la poussée de la motorisation.

Dans le domaine des tuyères à section variable, on connait le document GB-588.502. Ce document décrit une tuyère à section variable avec des parties mobiles dont le mouvement est contrôlé par une chaîne cinématique qui comprend un moteur, une tige reliée au moteur, un câble relié aux parties mobiles et un mécanisme pour accoupler/désaccoupler la tige et le câble. Ce mécanisme est contrôlé par un solénoïde. Lorsque le solénoïde est désactivé, le mécanisme assure l'accouplement de la tige et du câble si bien que les parties mobiles bougent en fonction de la rotation du moteur. Lorsque le solénoïde est activé, le mécanisme n'assure plus l'accouplement de la tige et du câble si bien que le mouvement des parties mobiles est libre. Dans ce cas, il est impossible de déterminer la position exacte des parties mobiles et d'adapter la poussée de la motorisation. Par conséquent, cette architecture simpliste ne permet pas de respecter les normes actuelles en matière de fiabilité du contrôle de la poussée de la motorisation.

La présente invention vise à remédier aux inconvénients de l'art antérieur.

A cet effet, l'invention a pour objet un dispositif de commande selon la partie caractérisante de la revendication 1 d'une tuyère à section variable d'une motorisation d'un aéronef, ladite tuyère à section variable comprenant une ou plusieurs parties mobiles permettant de modifier la section de la tuyère et reliées par l'intermédiaire d'une chaîne de transmission mécanique à un actionneur, ledit dispositif comprenant un système de régulation de la motorisation relié à un organe de contrôle apte à contrôler l'actionneur. Cette architecture permet de réduire la masse embarquée et simplifie son intégration et son fonctionnement. De plus, le dispositif obtenu respecte les normes actuelles en matière de fiabilité du contrôle de la poussée de la motorisation.

D'autres caractéristiques et avantages ressortiront de la description qui va suivre de l'invention, description donnée à titre d'exemple uniquement, en regard des dessins annexés sur lesquels :
- La figure 1 est une vue latérale d'un ensemble propulsif d'un aéronef avec un arrachement partiel permettant de montrer de manière schématique une tuyère à section variable,
- La figure 2 est une représentation schématique d'une architecture de commande d'une tuyère à section variable selon l'art antérieur, et
- La figure 3 est une représentation schématique d'une architecture de commande d'une tuyère à section variable selon l'invention.

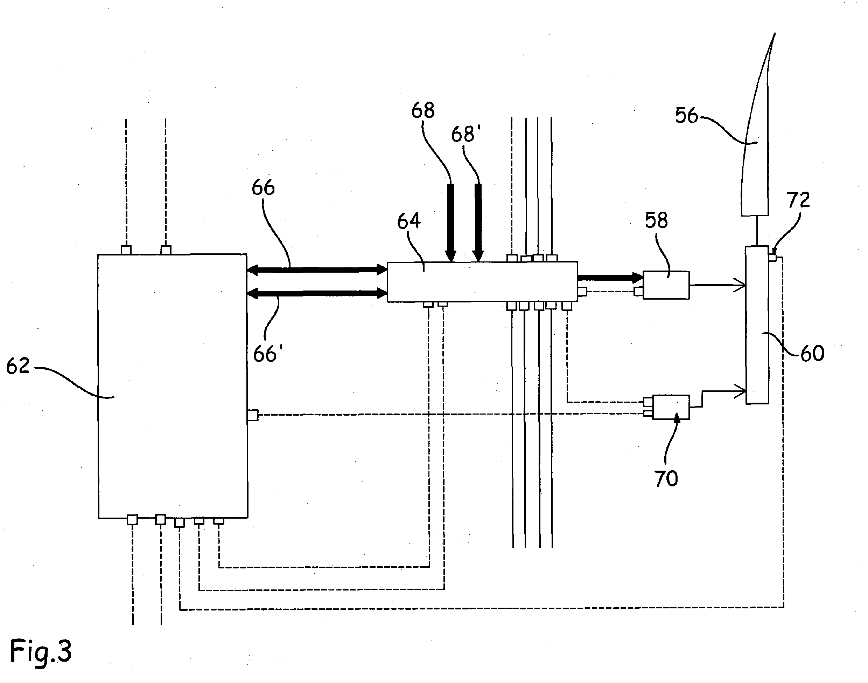

Une tuyère à section variable comprend au moins une partie mobile 56 reliée par l'intermédiaire d'une chaîne de transmission mécanique 60 à un actionneur 58 tel qu'un moteur, comme illustré de manière schématique sur la figure 3.

La motorisation, la tuyère à section variable, la ou les paries mobiles 56, la chaine de transmission mécanique et l'actionneur 58 ne sont pas plus décrits car ils sont connus de l'homme du métier.

A titre d'exemple seulement, la tuyère à section variable et la chaine de transmission mécanique peuvent être identiques à celles décrites dans le document EP-779.429.

Pour assurer la commande de la tuyère à section variable, l'aéronef comprend un système de régulation 62 de la motorisation appelé également FADEC et un organe de contrôle 64 appelé également PE permettant de contrôler un actionneur 58. Comme pour l'art antérieur, l'organe de contrôle 64 assure la fonction de convertisseur entre un circuit de commande en amont et un circuit de puissance en aval.

Selon l'invention, pour chaque tuyère à section variable, l'aéronef comprend un unique organe de contrôle 64. Selon une première variante, l'aéronef comprend pour chaque tuyère à section variable un unique actionneur 58 apte à déplacer grâce à une chaîne cinématique toutes les parties mobiles de la tuyère à section variable, ledit actionneur étant contrôlé par l'unique organe de contrôle 64. Selon une autre variante, l'aéronef comprend pour chaque tuyère à section variable, plusieurs actionneurs 58, chacun d'eux étant relié à des parties mobiles via des chaînes de transmission mécanique, l'ensemble des actionneurs permettant de déplacer toutes les parties mobiles d'une tuyère à section variable et étant contrôlé par un unique organe de contrôle 64. Bien que la chaîne de transmission soit plus complexe dans le cas d'un unique actionneur, cette solution sera privilégiée car elle permet de réduire la masse embarquée, et de simplifier le fonctionnement et l'intégration.

Selon un mode de réalisation, un actionneur 58 se présente sous la forme d'un moteur électrique dont l'arbre de sortie est relié à une première extrémité de la chaîne de transmission mécanique, l'autre extrémité ou plus précisément les autres extrémités de cette dernière étant reliées chacune à une partie mobile. L'aéronef comprend pour chaque organe de contrôle 64 deux séries de câbles 66, 66' assurant la transmission des signaux entre le système de régulation 62 et l'organe de contrôle 64 et deux alimentations 68, 68' en énergie électrique. Selon les normes de certification, la perte de contrôle de la section variable de la tuyère découle soit de la défaillance de l'actionneur 58 (ou d'un des actionneurs), soit de la défaillance de l'organe de contrôle 64 en raison d'une coupure de l'alimentation électrique ou d'un dysfonctionnement interne.

Selon une caractéristique du procédé et du dispositif de commande de l'invention, l'aéronef comprend pour chaque tuyère à section variable des moyens d'immobilisation 70 de toutes les parties mobiles 56 qui sont en permanence activés et qui sont désactivés uniquement lorsque le système de régulation 62 commande le changement de position de la ou des parties mobiles 56. Ainsi tant que le déplacement des parties mobiles 56 d'une tuyère à section variable n'est pas commandé par le système de régulation 62 (via l'organe de contrôle 64), les moyens d'immobilisation 70 bloquent la ou les parties mobiles 56.

Les moyens d'immobilisation 70 sont susceptibles d'occuper deux états, un premier état activé dans lequel ils interfèrent avec la chaîne de transmission mécanique et empêchent tout mouvement de la ou des parties mobiles 56 et un second état désactivé dans lequel ils n'interfèrent pas avec la chaîne de transmission et autorisent le mouvement de la ou des parties mobiles 56. Ainsi, lorsque les moyens d'immobilisation 70 sont à l'état activé, la tuyère à section variable fonctionne comme une tuyère à section constante alors que lorsque les moyens d'immobilisation 70 sont à l'état désactivé elle fonctionne comme une réelle tuyère à section variable dont la section peut être ajustée.

De préférence, les moyens d'immobilisation comprennent un corps et une partie mobile susceptible d'être en contact avec un élément de la chaîne de transmission mécanique à l'état activé et distante dudit élément de la chaîne de transmission mécanique à l'état désactivé, ainsi qu'un moyen de rappel (comme un ressort par exemple) apte à maintenir la partie mobile à l'état activé et un actionneur apte en réponse à un signal à maintenir la partie mobile à l'état désactivé à l'encontre du moyen de rappel.

Ainsi, à l'état repos, en l'absence de signal, les moyens d'immobilisation sont activés.

Parmi les solutions envisageables pour assurer la fonction des moyens d'immobilisation, celle qui sera choisie devra avoir une fiabilité inférieure à 10^{E-6}. Pour répondre à ce critère, l'actionneur des moyens d'immobilisation est un électroaimant.

Selon un mode de réalisation, les moyens d'immobilisation 70 se présentent sous la forme d'un frein à disque comportant d'une part un étrier avec deux mâchoires qui serrent un élément de la chaîne de transmission, et d'autre part au moins un ressort tendant à maintenir les mâchoires rapprochées et au moins un électroaimant qui, lorsqu'il est activé, écarte les mâchoires à l'encontre du ressort.

Ainsi, lorsque l'électroaimant n'est pas parcouru par un courant, il n'exerce aucun effort si bien que les mâchoires sous l'action du ressort maintiennent la chaîne de transmission mécanique immobilisée.

Selon une première variante, les moyens d'immobilisation 70 sont commandés par l'organe de contrôle 64 et une liaison est prévue entre les moyens d'immobilisation 70 et l'organe de contrôle 64. Cette variante est plus particulièrement adaptée lorsque l'actionneur 58 est un moteur à courant continu. Dans ce cas, lorsque l'organe de contrôle 64 alimente en courant le moteur pour déplacer la ou les parties actives 56, il alimente également en parallèle ou en série l'électroaimant des moyens d'immobilisation qui passent alors à l'état désactivé. Selon un premier avantage, lorsque l'organe de contrôle est défaillant en raison d'une coupure de l'alimentation électrique ou d'un dysfonctionnement interne, aucun signal n'est transmis aux moyens d'immobilisation 70 qui restent ainsi à l'état activé.

En variante, les moyens d'immobilisation 70 pourraient être commandés par le système de régulation 62 et une liaison pourrait être prévue entre les moyens d'immobilisation 70 et le système de régulation 62. Dans ce cas, lorsque ce dernier transmet un signal électrique à l'organe de contrôle pour provoquer le mouvement de la ou des parties mobiles 56, il transmet en parallèle un signal aux moyens d'immobilisation pour les désactiver.

En complément des moyens d'immobilisation, l'aéronef comprend pour chaque tuyère des moyens 72 pour déterminer la position réelle de la ou des parties mobiles reliés au système de régulation 62. Ainsi, ces moyens 72 sont indépendants de l'organe de contrôle et de l'actionneur et peuvent renseigner le système de régulation 62 même en cas de défaillance d'un de ces éléments.

De préférence, les moyens 72 pour déterminer la position réelle de la ou des parties mobiles comprennent un capteur incrémental angulaire de type RVDT (pour *Rotary Variable Differential Transformer).*

Ce capteur peut être installé au niveau de l'actionneur, au niveau de la chaîne de transmission mécanique ou au niveau de la ou des parties mobiles.

En fonctionnement normal, avant chaque changement de configuration, les moyens 72 renseignent le système de régulation 62 et lui indiquent la position réelle de la ou des parties mobiles de la tuyère à section variable.

En suivant, le système de régulation 62 transmet un signal à l'organe de contrôle 64 afin que ce dernier déclenche la rotation du moteur 58 d'une certaine valeur angulaire. En parallèle, une instruction est transmise aux moyens d'immobilisation 70 afin de les désactiver. A la réception du signal, l'organe de contrôle 64 commande la rotation du moteur 58 selon la valeur angulaire donnée qui lui-même provoque via la chaîne de transmission mécanique le mouvement de la ou des parties mobiles de la tuyère à section variable. Ce mouvement est rendu possible du fait que les moyens d'immobilisation sont désactivés. Après un laps de temps, les moyens d'immobilisation sont de nouveau activés. Ce laps de temps peut être généré par une temporisation.

Avantageusement, les moyens 72 indiquent au système de régulation 62 la nouvelle position réelle de la ou des parties mobiles 56 de la tuyère à section variable après chaque changement configuration. Ce retour d'informations permet d'indiquer au système de régulation 62 si l'organe de contrôle et/ou l'actionneur 58 sont défaillants. En effet, si la position réelle détectée par les moyens 72 et transmise au système de régulation 62, après la modification de la configuration de la tuyère à section variable, ne correspond pas à la valeur théorique calculée par le système de régulation 62 alors cela traduit une défaillance d'un des éléments.

Même dans cette circonstance, le contrôle de la poussée est parfaitement maîtrisé du fait que les moyens d'immobilisation 70 empêchent la modification de la section qui est maintenue à une valeur donnée connue grâce aux moyens 72 par le système de régulation 62.

A titre d'exemple, trois configurations sont examinées pour montrer que le pilote est toujours capable de maîtriser la poussée du moteur en cas de défaillance de l'actionneur et/ou de l'organe de contrôle.

Le premier cas de figure est un blocage de la tuyère en position ouverte. Dans ce cas, la poussée ne sera pas adaptée à la phase de croisière. L'augmentation du régime moteur permet de récupérer le manque de poussée moyennant une surconsommation de carburant. Si on ne peut pas récupérer suffisamment de poussée, alors l'altitude de croisière sera abaissée. On estime la surconsommation de carburant de l'ordre de 5% dans ce cas de figure.

Le second cas de figure est un blocage en position fermée. Dans cette situation, la tuyère a une configuration adaptée pour la phase de croisière.

Dans la mesure où avant le décollage la tuyère doit être configurée en position ouverte, si le pilote détecte le blocage en position fermée lors des vérifications effectuées avant le décollage, il pourra soit annuler le vol ou soit forcer manuellement en position ouverte grâce à l'aide d'un mécanicien au sol.

Si cette anomalie survient lors du vol, en cas de remise des gaz, la puissance du moteur sera diminuée pour éviter le risque de vibrations. Cependant, l'avion est dimensionné pour pouvoir faire une remise des gaz avec un seul moteur.

Le dernier cas de figure est un blocage en position intermédiaire. La poussée du moteur ne sera ni adaptée à la phase de croisière, ni à la phase de décollage. Toutefois, la section de la tuyère sera parfaitement connue du système de régulation 62 grâce aux moyens 72.

Si cette anomalie intervient avant le décollage, comme précédemment, le pilote pourra soit annuler le vol ou soit forcer manuellement en position ouverte grâce à l'aide d'un mécanicien au sol.

Si l'avion est en phase de croisière, le régime moteur sera augmenté mais moins que dans le cas d'une ouverture totale.

Si l'avion se trouve en phase de descente, le régime moteur sera diminué pour éviter les vibrations mais moins que pour un fonctionnement normal.

Selon un procédé de contrôle de la poussée d'une motorisation d'un aéronef selon l'invention, les moyens 72 indiquent au système de régulation 62 la position réelle de la ou des parties mobiles 56, et le système de régulation 62 contrôle la poussée de la motorisation en tenant compte de la position réelle de la ou des parties mobiles 56 de la tuyère à section variable.

## Revendications

1. Dispositif de commande d'une tuyère à section variable d'une motorisation d'un aéronef, ladite tuyère à section variable comprenant une ou plusieurs parties mobiles (56) permettant de modifier la section de la tuyère et reliées par l'intermédiaire d'une chaîne de transmission mécanique (60) à un actionneur (58), ledit dispositif comprenant un système de régulation (62) de la motorisation relié à un organe de contrôle (64) apte à contrôler l'actionneur (58), **caractérisé** en ce **que** le dispositif de commande comprend un unique organe de contrôle (64), des moyens d'immobilisation (70) capables d'occuper un premier état activé dans lequel ils interfèrent avec la chaîne de transmission mécanique et empêchent tout mouvement de toutes les parties mobiles (56) et un second état désactivé lorsque le système de régulation (62) commande le changement de position de la ou des parties mobiles (56), dans lequel ils n'interfèrent pas avec la chaîne de transmission et autorisent le mouvement de toutes les parties mobiles (56) et des moyens (72) pour déterminer la position réelle de la ou des parties mobiles (56).

2. Dispositif de commande selon la revendication 1, caractérisé en ce **que** les moyens (72) pour déterminer la position réelle de la ou des parties mobiles (56) sont reliés au système de régulation (62) pour lui indiquer ladite position réelle.

3. Dispositif de commande selon la revendication 1 ou 2, caractérisé **en ce qu'il** comprend une liaison entre les moyens d'immobilisation (70) et l'organe de contrôle (64) qui commande leur désactivation.

4. Dispositif de commande selon l'une quelconque des revendications précédentes, **caractérisé en ce que** les moyens d'immobilisation (70) comprennent un corps et une partie mobile susceptible d'être en contact avec un élément de la chaîne de transmission mécanique à l'état activé et distante dudit élément de la chaîne de transmission mécanique à l'état désactivé, ainsi qu'un moyen de rappel tel qu'un ressort apte à maintenir la partie mobile à l'état activé et un actionneur apte en réponse à un signal à maintenir la partie mobile à l'état désactivé à l'encontre du moyen de rappel.

5. Dispositif de commande selon la revendication 4, caractérisé **en ce que** l'actionneur des moyens d'immobilisation (70) est un électroaimant.

6. Dispositif de commande selon l'une quelconque des revendications précédentes, **caractérisé en ce que** les moyens (72) pour déterminer la position réelle de la ou des parties mobiles (56) comprennent un capteur incrémental angulaire de type RVDT.

7. Procédé de commande d'une tuyère à section variable d'une motorisation d'un aéronef, ladite tuyère à section variable comprenant une ou plusieurs parties mobiles (56) permettant de modifier la section de la tuyère et reliées par l'intermédiaire d'une chaîne de transmission mécanique (60) à un actionneur (58), l'aéronef comprenant un système de régulation (62) de la motorisation relié à un organe de contrôle (64) apte à contrôler l'actionneur (58), **caractérisé en ce qu'**il consiste à utiliser un unique organe de contrôle (64), des moyens d'immobilisation (70) de toutes les parties mobiles (56) capables d'occuper un premier état activé dans lequel ils interfèrent avec la chaîne de transmission mécanique et empêchent tout mouvement de toutes les parties mobiles (56) et un second état désactivé dans lequel ils n'interfèrent pas avec la chaîne de transmission et autorisent le mouvement de toutes les parties mobiles (56) et des moyens (72) pour déterminer la position réelle de la ou des parties mobiles (56) et **en ce que** lesdits moyens d'immobilisation (70) sont désactivés uniquement lorsque le système de régulation (62) commande le changement de position de la ou des parties mobiles (56).

8. Procédé de commande selon la revendication 7, **caractérisé en ce que** les moyens (72) pour déterminer la position réelle de la ou des parties mobiles (56) renseignent le système de régulation (62) en lui indiquant la position réelle de la ou des parties mobiles de la tuyère à section variable avant chaque changement de configuration.

9. Procédé de commande selon la revendication 7 ou 8, caractérisé **en** ce **que** les moyens (72) pour déterminer la position réelle de la ou des parties mobiles (56) renseignent le système de régulation (62) en lui indiquant la position réelle de la ou des parties mobiles de la tuyère à section variable après chaque changement de configuration.

10. Procédé de contrôle de la poussée d'une motorisation d'un aéronef équipé d'une tuyère à section variable, ladite tuyère à section variable comprenant une ou plusieurs parties mobiles (56) permettant de modifier la section de la tuyère et reliées par l'intermédiaire d'une chaîne de transmission mécanique (60) à un actionneur (58), l'aéronef comprenant un système de régulation (62) de la motorisation relié à un organe de contrôle (64) apte à contrôler l'actionneur (58), **caractérisé en** ce **qu'il** consiste à utiliser un unique organe de contrôle (64), des moyens d'immobilisation (70) capables d'occuper un premier état activé dans lequel ils interfèrent avec la chaîne de transmission mécanique et empêchent tout mouvement de toutes les parties mobiles (56) et un second état désactivé lorsque le système de régulation (62) commande le changement de position de la ou des parties mobiles (56), dans lequel ils n'interfèrent pas avec la chaîne de transmission et autorisent le mouvement de toutes les parties mobiles (56) et des moyens (72) pour déterminer la position réelle de la ou des parties mobiles (56), **en ce que** les moyens (72) indiquent au système de régulation (62) la position réelle de la ou des parties mobiles (56), et **en** ce **que** le système de régulation (62) contrôle la poussée de la motorisation en tenant compte de la position réelle de la ou des parties mobiles (56) de la tuyère à section variable.

## Patentansprüche

1. Steuervorrichtung einer Düse mit variablem Querschnitt für eine Motorisierung eines Luftfahrzeugs, wobei die Düse mit variablem Querschnitt ein oder mehrere bewegliche Teile (56) aufweist, die es gestatten, den Querschnitt der Düse zu ändern, und die über eine mechanische Transmissionskette (60) mit einem Stellantrieb (58) verbunden sind, wobei die Vorrichtung ein Regelsystem (62) für die Motorisierung aufweist, das mit einem Steuerorgan (64) verbunden ist, das dazu eingerichtet ist, den Stellantrieb (58) zu steuern, **dadurch gekennzeichnet, dass** die Steuervorrichtung mit einem einzelnen Steuerorgan (64), mit Mitteln (70) für die Ruhigstellung, die in der Lage sind, einen ersten aktivierten Zustand einzunehmen, in dem sie auf die mechanische Transmissionskette einwirken und jede Bewegung aller beweglichen Teile (56) verhindern, und, wenn das Regelsystem (62) die Änderungen der Lage des beweglichen Teils oder der beweglichen Teile (56) steuert, einen zweiten deaktivierten Zustand einzunehmen, in dem sie nicht auf die Transmissionskette einwirken und die Bewegung von allen beweglichen Teilen (56) gestatten, und mit Mitteln (72) versehen ist, um die tatsächliche Lage des beweglichen Teils oder der beweglichen Teile (56) zu bestimmen.

2. Steuervorrichtung nach Anspruch 1, **dadurch gekennzeichnet, dass** die Mittel (72) für die Bestimmung der tatsächlichen Lage des beweglichen Teils oder der beweglichen Teile (56) mit dem Regelsystem (62) verbunden sind, um diesem die tatsächliche Lage anzuzeigen.

3. Steuervorrichtung nach Anspruch 1 oder 2, **dadurch gekennzeichnet, dass** diese eine Verbindung zwischen den Mitteln (70) zur Ruhigstellung und dem Steuerorgan (64) aufweist, das deren Deaktivierung steuert.

4. Steuervorrichtung nach einem der vorhergehenden Ansprüche, **dadurch gekennzeichnet, dass** die Mittel (70) zur Ruhigstellung einen Grundkörper und einen beweglichen Teil aufweisen, der dazu eingerichtet ist, im aktivierten Zustand mit einem Element der mechanischen Transmissionskette in Kontakt zu stehen, und der sich im deaktivierten Zustand im Abstand zu der mechanischen Transmissionskette befindet, ebenso wie Rückstellmittel, wie eine Feder, die dazu eingerichtet sind, den beweglichen Teil im aktivierten Zustand zu halten, und einen Stellantrieb, der dazu eingerichtet ist, auf ein Signal hin den beweglichen Teil gegen das Rückstellmittel im deaktivierten Zustand zu halten.

5. Steuervorrichtung nach Anspruch 4, **dadurch gekennzeichnet, dass** der Stellantrieb der Mittel (70) für die Ruhigstellung ein Elektromagnet ist.

6. Steuervorrichtung nach einem der vorhergehenden Ansprüche, **dadurch gekennzeichnet, dass** die Mittel (72) für die Bestimmung der tatsächlichen Lage des beweglichen Teils oder der beweglichen Teile (56) einen Winkelschrittgeber vom Typ RVDT aufweisen.

7. Steuerverfahren für ein Ventil mit variablem Querschnitt einer Motorisierung eines Luftfahrzeugs, wobei die Düse mit variablem Querschnitt ein oder mehrere bewegliche Teile (56) aufweist, die es gestatten, den Querschnitt der Düse zu ändern, und die über eine mechanische Transmissionskette (60) mit einem Stellantrieb (58) verbunden sind, wobei das Luftfahrzeug ein Regelsystem (62) für die Motorisierung aufweist, das mit einem Steuerorgan (64) verbunden ist, das dazu eingerichtet ist, den Stellantrieb (58) zu steuern, **dadurch gekennzeichnet, dass** dieses darin besteht, ein einzelnes Steuerorgan (64), Mittel (70) für die Ruhigstellung, die in der Lage sind, einen ersten aktivierten Zustand einzunehmen, in dem sie auf die mechanische Transmissionskette einwirken und jede Bewegung aller beweglichen Teile (56) verhindern, und, wenn das Regelsystem (62) die Änderungen der Lage des beweglichen Teils oder der beweglichen Teile (56) steuert, einen zweiten deaktivierten Zustand einzunehmen, in dem sie nicht auf die Transmissionskette einwirken und die Bewegung von allen beweglichen Teilen (56) gestatten, und Mittel (72) zu verwenden, um die tatsächliche Lage des beweglichen Teils oder der beweglichen Teile (56) zu bestimmen, und dass die Mittel (70) für die Ruhigstellung nur dann deaktiviert werden, wenn das Regelsystem (62) die Änderung der Lage des beweglichen Teils oder der beweglichen Teile (56) steuert.

8. Steuerverfahren nach Anspruch 7, **dadurch gekennzeichnet, dass** die Mittel (72) zum Bestimmen der tatsächlichen Lage des beweglichen Teils oder der beweglichen Teile (56) das Regelsystem (62) beaufschlagen, indem sie diesem die tatsächliche Lage des beweglichen Teils oder der beweglichen Teile der Düse mit beweglichem Querschnitt vor jeder Änderung der Konfiguration anzeigen.

9. Steuerverfahren nach Anspruch 7 oder 8, **dadurch gekennzeichnet, dass** die Mittel (72) zum Bestimmen der tatsächlichen Lage des beweglichen Teils oder der beweglichen Teile (56) das Regelsystem (62) beaufschlagen, indem sie diesem die tatsächliche Lage des beweglichen Teils oder der beweglichen Teile des Ventils mit beweglichem Querschnitt nach jeder Änderung der Konfiguration anzeigen.

10. Verfahren zur Steuerung des Schubs einer Motorisierung eines Luftfahrzeugs, das mit einem Ventil mit beweglichem Querschnitt ausgestattet ist, wobei die Düse mit variablem Querschnitt ein oder mehrere bewegliche Teile (56) aufweist, die es gestatten, den Querschnitt der Düse zu ändern, und die über eine mechanische Transmissionskette (60) mit einem Stellantrieb (58) verbunden sind, wobei das Luftfahrzeug ein Regelsystem (62) für die Motorisierung aufweist, das mit einem Steuerorgan (64) verbunden ist, das dazu eingerichtet ist, den Stellantrieb (58) zu steuern, **dadurch gekennzeichnet, dass** dieses darin besteht, ein einzelnes Steuerorgan (64), Mittel (70) für die Ruhigstellung, die in der Lage sind, einen ersten aktivierten Zustand einzunehmen, in dem sie auf die mechanische Transmissionskette einwirken und jede Bewegung aller beweglichen Teile (56) verhindern, und, wenn das Regelsystem (62) die Änderungen der Lage des beweglichen Teils oder der beweglichen Teile (56) steuert, einen zweiten deaktivierten Zustand einzunehmen, in dem sie nicht auf die Transmissionskette einwirken und die Bewegung von allen beweglichen Teilen (56) gestatten, und Mittel (72) zu verwenden, um die tatsächliche Lage des beweglichen Teils oder der beweglichen Teile (56) zu bestimmen, dass die Mittel (72) dem Regelsystem (62) die tatsächliche Lage des beweglichen Teils oder der beweglichen Teile (56) anzeigen, und dass das Regelsystem (62) den Schub der Motorisierung unter Berücksichtigung der tatsächlichen Lage des beweglichen Teils oder der beweglichen Teile (56) des Ventils mit beweglichem Querschnitt steuert.

## Claims

1. Device for controlling a variable section nozzle of an aircraft power plant, said variable section nozzle comprising one or several movable parts (56) capable of modifying the nozzle section and connected by means of a mechanical transmission chain (60) to an actuator (58), said device comprising a system (62) for regulating the power plant connected to a control member (64) adapted to control the actuator (58), **characterized in that** the control device comprises a single control member (64), means (70) for immobilizing capable of occupying a first activated state in which they interfere with the mechanical transmission chain and prevent any movement of all the movable parts (56) and a second desactivated state when the regulation system (62) controls the positional change of the movable part or parts (56), in which they do not interfere with the mechanical transmission chain and allow the movement of all the movable parts (56) and means (72) for determining the actual position of the movable part or parts (56).

2. Control device according to claim 1, **characterized in that** the means (72) for determining the actual position of the movable part or parts (56) are connected to the regulation system (62) to indicate said actual position thereto.

3. Control device according to claim 1 or 2, **characterized in that** it comprises a connection between the immobilization means (70) and the control member (64) which controls their deactivation.

4. Control device according to any of the previous claims, **characterized in that** the immobilization means (70) comprise a body and a movable part capable of being in contact with an element of the mechanical transmission chain in the activated state and spaced from said element of the mechanical transmission chain in the deactivated state, as well as a return means such as a spring adapted to maintain the movable part in the activated state and an actuator adapted, in response to a signal, to maintain the movable part in the deactivated state against the return means.

5. Control device according to claim 4, **characterized in that** the actuator of the immobilization means (70) is an electromagnet.

6. Control device according to any of the previous claims, **characterized in that** the means (72) for determining the actual position of the movable part or parts (56) comprise an angular incremental sensor of the type RVDT.

7. Method for controlling a variable section nozzle of an aircraft power plant, said variable section nozzle comprising one or several movable parts (56) capable of modifying the nozzle section and connected by means of a mechanical transmission chain (60) to an actuator (58), the aircraft comprising a system (62) for regulating the power plant connected to a control member (64) adapted to control the actuator (58), **characterized in that** it consists of using a single control member (64), means (70) for immobilizing all the movable parts (56) capable of occupying a first activated state in which they interfere with the mechanical transmission chain and prevent any movement of all the movable parts (56) and a second desactivated state in which they do not interfere with the mechanical transmission chain and allow the movement of all the movable parts (56), and means (72) for determining the actual position of the movable part or parts (56) and **in that** said immobilization means (70) are deactivated only when the regulation system (62) controls the positional change of the movable part or parts (56).

8. Control method according to claim 7, **characterized in that** the means (72) for determining the actual position of the movable part or parts (56) inform the regulation system (62) by indicating thereto the actual position of the movable part or parts of the variable section nozzle before each configuration change.

9. Control method according to claim 7 or 8, **characterized in that** the means (72) for determining the actual position of the movable part or parts (56) inform the regulation system (62) by indicating thereto the actual position of the movable part or parts of the variable section nozzle after each configuration change.

10. Method for controlling the thrust of an aircraft power plant equipped with a variable section nozzle, said variable section nozzle comprising one or several movable parts (56) capable of modifying the nozzle section and connected by means of a mechanical transmission chain (60) to an actuator (58), the aircraft comprising a system (62) for regulating the power plant connected to a control member (64) adapted to control the actuator (58), **characterized in that** it consists of using a single control member (64), means (70) for immobilizing capable of occupying a first activated state in which they interfere with the mechanical transmission chain and prevent any movement of all the movable parts (56) and a second desactivated state when the regulation system (62) controls the positional change of the movable part or parts (56), in which they do not interfere with the mechanical transmission chain and allow the movement of all the movable parts (56) and means (72) for determining the actual position of the movable part or parts (56), **in that** the means (72) indicate, to the regulation system (62), the actual position of the movable part or parts (56), and **in that** the regulation system (62) controls the thrust of the power plant by taking into account the actual position of the movable part or parts (56) of the variable section nozzle.
